# EUROPÄISCHE PATENTSCHRIFT

(11) **EP 3 484 943 B1**
(45) Veröffentlichungstag und Bekanntmachung des Hinweises auf die Patenterteilung: **09.10.2019**
(21) Anmeldenummer: 17703710.8
(22) Anmeldetag: 01.02.2017
(51) Int. Cl.: C08G 77/06

(54) **VERFAHREN ZUR KONTINUIERLICHEN HERSTELLUNG VON ALKOXYARMEN VERZWEIGTEN SILOXANEN**
METHOD FOR CONTINUOUSLY PRODUCING LOW-ALKOXY BRANCHED SILOXANES
PROCÉDÉ POUR PRODUIRE EN CONTINU DES SILOXANES RAMIFIÉS PAUVRES EN ALCOXYS

(43) Veröffentlichungstag der Anmeldung: 22.05.2019
(73) Patentinhaber: Wacker Chemie AG, 81737 München (DE)
(72) Erfinder: DÖRRICH, Steffen, 81827 München (DE); WEIDNER, Richard, 84489 Burghausen (DE)
(74) Vertreter: Mai, Marit
(86) Internationale Anmeldenummer: PCT/EP2017/052184
(87) Internationale Veröffentlichungsnummer: WO 2018/141383

(56) Entgegenhaltungen:
- DE-A1-102005 003 899

## Beschreibung

Die Erfindung betrifft ein Verfahren zur kontinuierlichen Herstellung von alkoxyarmen verzweigten Siloxanen.

DE 102005003899 A beschreibt ein Verfahren zur kontinuierlichen Herstellung von alkoxyarmen Silikonharzen. Adaptiert man diese Erfindung zur Synthese von verzweigten Silikonölen und niedrigviskosen Silikonharzen tritt aufgrund der dazu benötigten höheren Konzentration an Trialkylsilyl-Einheiten (insbesondere Me₃Si-) eine Akkumulation von R₃SiCl im Kopf der Kolonne auf, was in letzter Konsequenz zum Abbruch und zur Nichtdurchführbarkeit des Prozesses führt.

Es bestand daher die Aufgabe, ein Kolonnenverfahren zur Verfügung zu stellen, welches die Vorteile einer kontinuierlichen kolonnenenthaltenden Herstellung auch für dreidimensional vernetzte, alkoxyarme Organosiloxane (Silikonöle und Silikonharze) ermöglicht.

Gegenstand der Erfindung ist ein kontinuierliches Verfahren zur Herstellung von Organosiloxanen (O) durch Umsetzung von Siliciumverbindung 1 der allgemeinen Formel 1

RₙSiHal₄₋ₙ (1),

und Siliciumverbindung 2, die ausgewählt wird aus Siliciumverbindung der allgemeinen Formel 2a oder Siliciumverbindung der allgemeinen Formel 2b oder Gemischen aus Siliciumverbindung der allgemeinen Formel 2a und 2b

R¹₃SiHal (2a),

R¹₃Si-O-SiR¹₃ (2b),

wobei
- **R**: Wasserstoff oder einen C1-C12 Kohlenwasserstoffrest,
- **R¹**: Wasserstoff oder einen C1-C7 Kohlenwasserstoffrest,
- **Hal**: Fluor, Chlor, Brom oder Iod und
- **n**: einen Wert 0 oder 1 bedeuten,
mit Alkohol und Wasser in Gegenwart von Organosiloxan (O) in einer Reaktionseinheit umfassend eine Destillationskolonne und ein darunter angeordnetes Organosiloxan (O) enthaltendes Gefäß (G), wobei der Inhalt des Gefäßes zum Sieden unter Rückfluss erhitzt wird, Siliciumverbindung 1 oberhalb des unteren Kolonnenendes in die Kolonne eingeführt, Siliciumverbindung 2 in das Gefäß (G) eingeführt wird, entstehender Halogenwasserstoff mittels der Destillationskolonne entfernt wird und Organosiloxan (O) im Maße seiner Bildung stetig aus dem Gefäß abgezogen wird, wobei der Reaktionseinheit stetig Siliciumverbindung 1, Siliciumverbindung 2, Alkohol und Wasser in solchen Mengen zugegeben wird, dass in der Reaktionseinheit immer mehr Wasser enthalten ist, als durch die zugegebenen Siliciumverbindung 1 und Siliciumverbindung 2 verbraucht werden kann.

Die Siliciumverbindung 2 bringt die R¹₃Si- Einheiten in das Organopolysiloxan (O) ein. Die Siliciumverbindung 2 wird, anders als in DE 102005003899 A beschrieben, nicht in die Kolonne eingeführt, sondern direkt in das Wasser enthaltende Gefäß (G). So kommt es nicht zur oben beschriebenen Akkumulation von Siliciumverbindungen der allgemeinen Formel 2a.

Durch die Hydrolyse und Alkoholyse von Siliciumverbindung 1, 2a und 3 wird Halogenwasserstoff freigesetzt, welches die Hydrolyse-, Alkoholyse- und Kondensationsreaktionen katalysiert. Beispielweise die Reaktion von R¹₃Si-O-SiR¹₃ zu R¹₃SiOH oder R¹₃SiO**R**". **R"** ist unten definiert.

Für den Prozess ist es essentiell, dass Siliciumverbindung 2 direkt in das Wasser enthaltende Gefäß (G) eingeführt wird, da sich bei Abwesenheit von Wasser ein durch Halogenwasserstoff katalysiertes Gleichgewicht aus R¹₃SiO**R**" (siehe vorstehenden Absatz), Halogenwasserstoff, Alkohol und R¹₃SiHal ergibt, welches beispielweise im Fall von 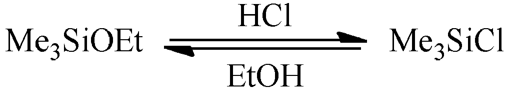 deutlich auf der Seite von Me₃SiCl liegt. Im Prozess wird das Gleichgewicht zusätzlich dadurch beeinflusst, dass Me₃SiCl in diesem Beispiel die niedrigst siedende Komponente (niedriger als Ethanol) ist und damit aus dem Sumpf destilliert wird. Dadurch wird weiteres Me₃SiCl analog obiger Gleichung nachgebildet. Bei Anwesenheit von Wasser spielt dieses Gleichgewicht dagegen eine untergeordnete Rolle, da Wasser bevorzugt mit R¹₃SiHal und R¹₃SiO**R**" reagiert.

Auch bei anderen im Prozess intermediär auftretenden Alkoxysilanen (beispielweise Si(OEt)₄, MeSi(OEt)₃ und Me₂Si(OEt)₂) ergibt sich ein ähnliches Gleichgewicht mit HCl, welches aber deutlich stärker auf Seiten der reinen Alkoxysilane liegt.

Das Wasser wird durch die Si-Halogen-Einheiten der Siliciumverbindung 1 und Siliciumverbindung 2 verbraucht und Halogenwasserstoff entsteht. Halogenwasserstoff löst sich bei den im Prozess vorherrschenden Bedingungen in der im Gefäß (G) vorliegenden Mischung bis zur Sättigung. Weiterer Halogenwasserstoff wird dann mittels Destillationskolonne entfernt und kann recycelt werden.

Vorzugsweise ist die gelöste Menge Halogenwasserstoff zwischen 40000 bis 100000 ppm, besonders bevorzugt zwischen 60000 bis 80000 ppm, ganz besonders bevorzugt zwischen 65000 bis 75000 ppm jeweils bezogen auf das Gesamtgewicht der flüssigen Phase im Gefäß (G) der ersten Reaktionseinheit.

Die vorliegende Konzentration des Halogenwasserstoffs kann durch die eingesetzte Wassermenge, die eingesetzte Ethanolmenge, durch Einleiten eines Inertgases in das Gefäß (G) und durch Einleitung von Halogenwasserstoff- und R¹₃SiCl-haltigem Kopfdestillat/Rücklauf in das Gefäß (G) der Reaktionseinheit gesteuert werden.

Vorzugsweise werden die Siliciumverbindungen 1 und 2, Alkohol und Wasser in solchen Mengen in die Reaktionseinheit eingeführt, dass in dem Gefäß (G) mindestens 3 Gew.% Wasser, vorzugsweise mindestens 5 Gew.%, insbesondere bevorzugt 7-16 Gew.% Wasser, jeweils bezogen auf das Gesamtgewicht der flüssigen Phase im Gefäß (G), vorliegt.

Vorzugsweise werden die Siliciumverbindungen 1 und 2, Alkohol und Wasser in solchen Mengen in die Reaktionseinheit eingeführt, dass in dem Gefäß (G) mindestens 20 Gew.% Alkohol, vorzugsweise mindestens 30 Gew.%, insbesondere bevorzugt 35-45 Gew.% Alkohol, jeweils bezogen auf das Gesamtgewicht der flüssigen Phase im Gefäß (G), vorliegt.

Vorzugsweise wird vor Einführung von umzusetzender Siliciumverbindungen 1 und 2 in die Destillationskolonne in dem Gefäß (G) ein Gemisch aus Alkohol, Disiloxan (Silciumverbindung 2a), Organosiloxan (O) sowie Wasser zum Sieden unter Rückfluss erhitzt.

Beispiele für C1-C7 bzw. C12 Kohlenwasserstoffreste **R** und **R¹** sind Methyl-, Ethyl-, Vinyl-, n-Propyl-, i-Propyl, Allyl-, n-Butyl, i-Butyl, n-Pentyl-, i-Pentyl, n-Hexyl, i-Hexyl-, Cyclohexyl, n-Heptyl-, n-Octyl, i-Octyl-, Phenyl- und Tolylreste; ferner durch gegenüber jeweils eingesetztem Alkohol und Wasser unter den jeweiligen Reaktionsbedingungen inerte Atome oder Gruppen substituierte, einwertige Kohlenwasserstoffreste, bei denen die Kohlenstoffatome, an die Halogen gebunden ist, in alpha-Stellung oder mindestens in gamma-Stellung zum Si-Atom stehen, z. B. der gamma-Chlorpropylrest; und Halogenarylreste, z. B. Chlorphenylreste. Weiteres Beispiel für geeignete substituierte Kohlenwasserstoffreste ist der beta-Cyanethylrest.

Besonders bevorzugt sind Methyl-, Vinyl-, n-Propyl-, n-Butyl i-Octyl, und Phenylreste.

**R** und **R¹** sind besonders bevorzugt ein Methyl-, Ethyl-, n-Propyl, Vinyl- oder ein Phenylrest. **R** und **R¹** sind ganz besonders bevorzugt ein Methyl oder Vinylrest.

Das Halogenatom **Hal** ist vorzugsweise Chlor.

Bevorzugt als Siliciumverbindung 1 sind Tetrachlorsilan, Methyltrichlorsilan (MeSiCl₃), Vinyltrichlorsilan (ViSiCl₃), Phenyltrichlorsilan (PhSiCl₃), Propyltrichlorsilan (PrSiCl₃).

Bevorzugt als Siliciumverbindung 2a ist Me₃SiCl, Chlordimethylvinylsilan (ViMe₂SiCl).

Bevorzugt als Siliciumverbindung 2b ist Me₃Si-O-SiMe₃ (Hexamethyldisiloxan) und 1,3-Divinyl-1,1,3,3-tetramethyldisiloxan (ViMe₂Si-o-SiMe₂Vi).

Es können Gemische verschiedener Siliciumverbindungen 1 und Siliciumverbindungen 2 verwendet werden.

Vorzugsweise werden pro 100 Masseteile Siliciumverbindungen 1 50 bis 1000, besonders bevorzugt 60 bis 600, insbesondere 200 bis 480 Masseteile Siliciumverbindungen 2 eingeführt.

Durch den möglichen hohen Anteil an Silciumverbindung 2 ist durch den beschriebenen Prozess möglich neben Harzen auch niedrigviskose Organosiloxane (z. B. Tristrimethylsiloxymethysilan (TM3) oder Tetrakistrimethylsiloxysilan (QM4)) in einer hohen Reinheit herzustellen.

Durch den hohen Anteil an Silciumverbindung 2 kommt es beim Prozess zu keinen Vergelungs- und Verkieselungserscheinungen, da Siliciumverbindung 2b (entsteht u.a. auch aus 2a und Wasser) nicht nur als Edukt, sondern zusätzlich auch als Lösemittel und Reaktionsvermittler auftritt.

Das Masseverhältnis von Siliciumverbindung der allgemeinen Formel 2b und Siliciumverbindung der allgemeinen Formel 2a kann beliebig sein.

Vorzugsweise ist das Masseverhältnis von Siliciumverbindung der allgemeinen Formel 2b 0,1 bis 5, insbesondere 0,5 bis 2.

In einer besonderen Ausführungsform ist das Masseverhältnis von Siliciumverbindung der allgemeinen Formel 2b mindestens 5, insbesondere mindestens 10 und ganz besonders bevorzugt wird nur Siliciumverbindung der allgemeinen Formel 2b eingesetzt. Dann wird die Destillationskolonne besonders von der Halogenwasserstoff-Last entlastet und der Durchsatz durch die Reaktionseinheit (Raum-Zeit-Ausbeute) kann deutlich verbessert werden.

In einer besonderen Ausführungsform werden ausschließlich Siliciumverbindung 1 der allgemeinen Formel 1 eingesetzt, bei denen **n** den Wert 0 hat und Siliciumverbindungen 2. Insbesondere wird Tetrakistrimethylsiloxysilan hergestellt aus SiCl₄ und Siliciumverbindung 2, die ausgewählt wird aus Me₃SiCl und/oder Me₃Si-O-SiMe_{3.}

In einer weiteren besonderen Ausführungsform kann zusätzlich Siliciumverbindung 3

R¹₂SiHal₂ (3),

eingeführt werden. Die Bedeutungen für **R¹** und **Hal** sind oben beschrieben. Siliciumverbindung 3 kann oberhalb des unteren Kolonnenendes in die Kolonne eingeführt oder in das Gefäß (G) eingeführt werden. Vorzugsweise wird Siliciumverbindung 3 in das Gefäß (G) eingeführt.

Falls Siliciumverbindungen 3 eingesetzt wird werden vorzugsweise pro 100 Masseteile Siliciumverbindungen 1 1 bis 50, besonders bevorzugt 5 bis 20 Masseteile Siliciumverbindungen 3 eingeführt.

Die Siliciumverbindungen 1 können flüssig oder dampfförmig in die Destillationskolonne eingeführt werden.

Siliciumverbindungen 1 werden vorzugsweise in der Mitte der Kolonne und besonders bevorzugt im oberen Kolonnendrittel der ersten Reaktionseinheit eingeführt. Siliciumverbindungen 2 werden vorzugsweise flüssig in das Gefäß (G) eingeführt.

Als Alkohole können beispielsweise alle Kohlenwasserstoffverbindungen mit einer alkoholischen Hydroxylgruppe eingesetzt werden, die bisher zur Herstellung von Alkoxysilanen bzw. Organosiloxanen durch Umsetzung von Chlorsilan mit Alkoholen und gegebenenfalls Wasser eingesetzt werden konnten und deren Siedepunkt unter dem des jeweils herzustellenden Organosiloxanen (O) liegt.

Als Alkohole sind solche der allgemeinen Formel R"OH bevorzugt, worin **R"** ein einwertiger, aliphatischer Kohlenwasserstoffrest mit 1 bis 8 Kohlenstoffatomen ist.

Die oben angegebenen Beispiele für aliphatische Kohlenwasserstoffreste **R,** soweit diese 1 bis 8 Kohlenstoffatome enthalten, gelten mit Ausnahme des Vinylrestes auch für die Reste **R".** Bevorzugt als Reste **R"** sind jedoch Alkylreste. Beispielhaft für im Rahmen der Erfindung verwendbare Alkohole sind Methanol, Ethanol, n-Propanol, Isopropanol, n-Butanol, Iso-Butanol, tert-Butanol, beta-Methoxyethanol, n-Hexanol und 2-Ethylhexanol. Es können Gemische aus verschiedenen Alkoholen eingesetzt werden.

Besonders bevorzugt sind Alkanole und durch ein Ethersauerstoffatom substituierte Alkanole mit jeweils 1 bis 6 Kohlenstoffatomen, wie Methanol, Ethanol, beta-Methoxyethanol, n-Propanol, Iso-Propanol, n-Butanol und n-Hexanol. Besonders bevorzugt sind Methanol, Ethanol und Iso-Propanol.

Falls erwünscht, können im ersten Schritt des erfindungsgemäßen Verfahrens zusätzlich zu Siliciumverbindung 1, 2, 3, Wasser und Alkohol auch weitere Stoffe eingesetzt werden. Beispiele für gegebenenfalls eingesetzte weitere Stoffe sind Alkoxysilane, wie Tetraethoxysilan oder Trimethylethoxysilan und Silanole wie Trimethylsilanol. Diese können an beliebiger Stelle in die Reaktionseinheit eingeführt werden. Vorzugsweise in die erste Reaktionseinheit, besonders bevorzugt in das Gefäß der ersten Reaktionseinheit.

Gegebenenfalls wird zweckmäßigerweise auch ein mit dem Organosiloxan (O) nicht reaktives organisches Lösungsmittel miteinbezogen. Dies ist vor allem dann bevorzugt, wenn das entstehende Organosiloxan (O) im erkalteten Zustand ein Festharz darstellt oder eine hohe Viskosität aufweist. Das Lösungsmittel ermöglicht dessen Aufnahme und bewirkt damit eine handhabbare Viskosität der Harzlösung. Als Lösungsmittel bieten sich alle klassischen organischen Lösungsmittel an. Bevorzugt werden aprotische organische Lösungsmittel eingesetzt, vorzugsweise Kohlenwasserstoffe, wie z. B. Hexan, Heptan, Toluol oder Xylol. Auch Mischungen können eingesetzt werden.

Das erfindungsgemäße Verfahren wird vorzugsweise beim Druck der umgebenden Atmosphäre, d. h. bei 0,8 bis 1,1 bar durchgeführt, weil beim Arbeiten unter dem Druck der umgebenden Atmosphäre der Aufwand z. B. für korrosionsfeste Pumpen entfällt. Es kann jedoch, falls es die Lage der Siedepunkte von Reaktionsteilnehmern erfordert oder zweckmäßig macht, auch bei höheren oder niedrigeren Drücken gearbeitet werden.

Vorzugsweise wird die aus der vorstehend beschriebenen Reaktionseinheit erhaltene Mischung enthaltend das Organosiloxan (O) in eine zweite Reaktionseinheit verbracht und dort auf eine Temperatur erhitzt, bei der die Mischung von flüchtigen Bestandteilen, worunter hier vorzugsweise Wasser, HCl, Alkohol, Disiloxan (Siliciumverbindung 2b; R¹₃Si-O-SiR¹₃), monofunktionelles Alkoxysilan (R¹₃SiOR") und monofunktionelles Silanol (R¹₃SiOH) zu verstehen sind, komplett oder partiell befreit wird, wobei die flüchtigen Bestandteile vorzugsweise von der zweiten Reaktionseinheit in die erste Reaktionseinheit zurückgeführt werden und Organosiloxan (O) vorzugsweise im Maße seiner Bildung stetig aus dem Sumpf der zweiten Reaktionseinheit abgezogen wird. Vorzugsweise handelt es sich bei der zweiten Reaktionseinheit ebenfalls um eine Reaktionseinheit umfassend eine Destillationskolonne, gegebenenfalls einen Rückflusskühler und ein bereits gewünschtes Organosiloxan (O) enthaltendes Gefäß. Durch Einleiten eines Inertgases in das Gefäß der zweiten Reaktionseinheit kann die Entfernung von flüchtigen Bestandteilen, insbesondere HCl, aus dem gewünschten Organosiloxan (O) begünstigt werden. Vorzugsweise wird die Konzentration des Halogenwasserstoffs durch Einleiten eines Inertgases in den Kolonnensumpf der zweiten Reaktionseinheit gesteuert.

Dadurch, dass das Destillat der zweiten Reaktionseinheit wieder in die erste Reaktionseinheit zurückgeführt wird, fällt keine saure Abwasserphase an.

Es ist dabei wichtig, dass der ersten Reaktionseinheit stetig Siliciumverbindung 1, Siliciumverbindung 2, Alkohol und Wasser in solchen Mengen zugegeben wird, dass den Reaktionseinheiten zusammen immer mehr Wasser enthalten ist, als durch die zugegebenen Siliciumverbindung 1 und Siliciumverbindung 2 verbraucht werden kann.

Siliciumverbindung 2, insbesondere 2b, kann direkt in die erste oder aber auch in die zweite Reaktionseinheit gegeben werden, da flüchtige Bestandteile der zweiten Reaktionseinheit in das Gefäß (G) der ersten Reaktionseinheit zurückgeführt werden. Vorzugsweise erfolgt die Dosierung in das Gefäß (G) der ersten Reaktionseinheit.

Die Rückführung der flüchtigen Bestandteile von der zweiten Reaktionseinheit in das Gefäß (G) der ersten Reaktionseinheit erfolgt vorzugsweise als Destillat oder Gas.

Wenn aprotisches organisches Lösungsmittel zugegeben wird, erfolgt die Zugabe bevorzugt zu der zweiten Reaktionseinheit.

Im Rahmen der vorliegenden Erfindung wurde festgestellt, dass durch einen Wasserüberschuss während der Reaktion die Kondensation kontrolliert werden kann. Das erfindungsgemäße Verfahren erlaubt somit die Nutzung der Kolonnenverfahren für die Herstellung beliebiger alkoxy- und silanolarmer Silikonöle und Silikonharze als Organosiloxan (O). Besonders bevorzugt lassen sich niedermolekulare alkoxy- und silanolarme Silikonöle herstellen.

Unter alkoxyarmen Silikonölen bzw. -harzen versteht man vorzugsweise Silikonöle bzw. -harze, die einen Alkoxy-Gehalt von maximal 7 Gew.% bezogen auf das Gesamtgewicht des kontinuierlich aus der zweiten Reaktionseinheit entnommene Organosiloxans (incl. 10-20% Disiloxan) enthalten, besonders bevorzugt Silikonöle bzw. -harze, die einen Alkoxy-Gehalt von maximal 3 Gew.% insbesondere bevorzugt maximal 1 Gew.% bezogen auf das Gesamtgewicht des kontinuierlich aus der zweiten Reaktionseinheit entnommene Organosiloxans (incl. 10-20% Disiloxan) enthalten.

Unter silanolarmen Silikonölen bzw. -harzen versteht man vorzugsweise Silikonöle bzw. -harze, die einen Silanol-Gehalt von maximal 1 Gew.% bezogen auf das Gesamtgewicht des kontinuierlich aus der zweiten Reaktionseinheit entnommene Organosiloxans (incl. 10-20% Disiloxans) enthalten, besonders bevorzugt Silikonöle bzw. -harze, die einen Silanol-Gehalt von maximal 0,5 Gew.% insbesondere bevorzugt maximal 0,1 Gew.% bezogen auf das Gesamtgewicht des kontinuierlich aus der zweiten Reaktionseinheit entnommene Organosiloxans (incl. 10-20% Disiloxan) enthalten.

Der bei der Reaktion in der ersten Reaktionseinheit entstehende Halogenwasserstoff wird vorzugsweise am Kopf der Reaktionseinheit 1 von den kondensierbaren Anteilen befreit, die ihrerseits wieder in die Reaktionseinheit zurückgegeben werden und steht damit als Gas für eine Rückgewinnung zur Verfügung.

Der erfindungsgemäße Wasserüberschuss in der Reaktionseinheit ist vorzugsweise so einzurichten, dass bereits bei der Befüllung der Reaktionseinheit vor Beginn der kontinuierlichen Reaktion Wasser im Überschuss zugegeben wird. Vorzugsweise wird der Wassergehalt anschließend konstant gehalten, beispielsweise indem man die Wassermenge kontinuierlich in dem Maße zugibt, wie sie durch Hydrolyse/Kondensation verbraucht/frei wird. Das Wasser kann direkt in die erste oder aber auch in die zweite Reaktionseinheit gegeben werden, da flüchtige Bestandteile der zweiten Reaktionseinheit in das Gefäß (G) der ersten Reaktionseinheit zurückgeführt werden. Vorzugsweise erfolgt die Dosierung des Wassers in die erste Reaktionseinheit. Besonders bevorzugt erfolgt die Dosierung des Wassers in das Gefäß (G) der ersten Reaktionseinheit. Zur Erniedrigung des HCl-Gehalts im Produkt kann es aber vorteilhaft sein Wasser in die Kolonne der zweiten Reaktionseinheit zu dosieren.

Alternativ kann der Wasserüberschuss in der Reaktionseinheit erreicht werden, indem man am Beginn der kontinuierlichen Reaktion mehr Wasser zudosiert als durch die Siliciumverbindungen 1, 2, und gegebenenfalls 3 zugegebenen Si-Hal-Einheiten verbraucht wird, bis der notwendige Wasserüberschuss im System vorhanden ist.

Zur Steuerung der Reaktionseinheit wird Alkohol verwendet. Die kontinuierlich zudosierte Menge richtet sich in dem Maße, wie sie durch die restlichen am entstandenen Organosiloxan (O) verbleibenden Alkoxygruppen verbraucht werden. Der Alkohol kann ebenfalls in beide Reaktionseinheiten zugegeben werden, vorzugsweise jedoch in Reaktionseinheit 1. Zur Erniedrigung des HCl-Gehalts im Produkt kann es aber vorteilhaft sein Alkohol in die Kolonne der zweiten Reaktionseinheit zu dosieren.

Als Destillationskolonne kann im Rahmen des erfindungsgemäßen Verfahrens jedes, meist mit Füllungen oder Einbauten versehene Rohr verwendet werden, das auch bei der fraktionierten Destillation zum Fraktionieren eingesetzt werden kann, beispielsweise eine Füllkörperkolonne. Eine entscheidende obere Grenze für die Kolonnenlänge besteht nicht. Wenn die Kolonne zu kurz ist, um einen ausreichenden Rückfluss bereits in der Kolonne zu gewährleisten, muss sie auch mit einer Kondensationseinheit (z. B. Rückflusskühler) ausgestattet sein. Das Gefäß (G) kann beispielsweise als Blase, Verdampfungskolben, Sumpfverdampfer oder vorzugsweise Umlaufverdampfer ausgebildet sein.

Bevorzugt besteht die eine Destillationskolonne enthaltende Reaktionseinheit mit Gefäß (G) aus einer Kolonne mit einem Umlaufverdampfer. Für die zweite Reaktionseinheit steht im Prinzip jede beheizbare Einheit zur Verfügung, die es ermöglicht, flüchtige Bestandteile abzutrennen, um diese wieder in die erste Reaktionseinheit zurück zu führen. Beispielsweise Kurzwegverdampfer, Fallfilmverdampfer oder Dünnschichtverdampfer. Bevorzugt werden Einheiten, die ebenfalls eine Kolonne enthalten verwendet, wobei das Reaktionsgemisch der ersten Reaktionseinheit zweckmäßigerweise möglichst in der Nähe des Kopfes der zweiten Reaktionskolonne gegeben wird. Besonders bevorzugt handelt es sich dabei um eine Kolonne mit einem Umlaufverdampfer.

Da die erste Reaktionseinheit in der Regel den größten Anteil an Wasser enthält, kann es sein, dass der Sumpf im Gefäß (G) der ersten Reaktionseinheit ein zweiphasiges Gemisch darstellt. Vorzugsweise werden aber Siliciumverbindung 1, 2, 3, Alkohol und Wasser in solchen Mengen in die Reaktionseinheit eingeführt, dass bei dem jeweils in der Kolonne herrschenden Druck und der im Kolonnensumpf herrschenden Temperatur im Kolonnensumpf und dem vorherrschend Naturumlauf (bei Verwendung eines Umlaufverdampfers) ein einphasiges Stoffgemisch vorliegt, welches sich beim Abkühlen in zwei Phasen auftrennt. Um dennoch aus dem Sumpf der ersten Reaktionseinheit nicht reine alkoholische Sauerwasserphase in die zweite Reaktionseinheit zu geben, ist eine zwischen beiden Reaktionseinheiten geschaltete Phasenseparierung bevorzugt. Oftmals reicht bereits eine Ruhezone zur Phasenseparierung zwischen den Reaktionseinheiten aus, prinzipiell ist jedoch jedes Verfahren der Phasenseparierung denkbar. Bevorzugt ist eine Phasenseparierung basierend auf Koaleszoreinheiten. Zur Förderung der Phasenseparierung kann es zweckmäßig sein, die im Kolonnensumpf entnommenen Mischung enthaltend das gewünschte Organosiloxan auf eine Temperatur unter 60°C, bevorzugt unter 40°C, besonders bevorzugt unter 30°C zu bringen. Die so erhaltene Silan-/Siloxanphase wird zweckmäßigerweise möglichst in der Nähe des Kopfes der zweiten Reaktionseinheit verbracht, die erhaltene alkoholische Sauerwasserphase wird in das Gefäß (G) der ersten Reaktionseinheit zurückgeführt. Dies hat zum Vorteil, dass die 2. Reaktionseinheit alkoholisches Sauerwasser nicht verflüchtigen muss und damit kleiner dimensioniert werden kann. Zudem erniedrigen sich der Energieaufwand und die Gefahr, dass HCl in das Gefäß (in den Sumpf) der zweiten Reaktionseinheit eingetragen wird und dort zur katalytischen Äquilibrierung des gewünschten Organosiloxans führt. Die zweite Reaktionseinheit muss damit nur noch die flüchtigen Bestandteile der Silan-/Siloxanphase (Silane wie R¹₃SiOR, Spuren an Alkohol, Wasser und HCl und einen Großteil des Disiloxans (Siliciumverbindung 2b)) in die erste Reaktionseinheit überführen.

Die Temperatur in der ersten Reaktionseinheit ist vorzugsweise niedriger als 100°C, besonders bevorzugt niedriger als 90°C. Die Temperatur in der zweiten Reaktionseinheit ist vorzugsweise höher als die Temperatur in der ersten Reaktionseinheit, vorzugsweise 5°C bis 10°C höher als die Siedetemperatur des jeweiligen Disiloxans (Siliciumverbindung 2a), im Falle der Anwesenheit eines Lösungsmittels jedoch vorzugsweise nicht höher als dessen Siedetemperatur.

Die Temperatur im Kolonnensumpf der ersten Reaktionseinheit ist vorzugsweise niedriger als 100°C.

Die Temperatur in einem Zwischenabschnitt der Reaktionskolonne 1 liegt bevorzugt bei dem jeweils in der Kolonne herrschenden Druck zumindest 0,5°C höher als der Siedepunkt des eingesetzten Alkohols, sodass die Temperatur vom Kopf zum Boden der Kolonne allmählich zunimmt.

Die Temperatur am Kolonnenkopf der ersten Reaktionseinheit wird bevorzugt so eingestellt, dass sich während der gesamten Reaktion immer überschüssiger Alkohol befindet, der unter Rückfluss siedet.

Die aus der zweiten Reaktionseinheit erhaltenen Organosiloxane oder Organosiloxanlösungen sind bereits sehr Halogenwasserstoff-arm, so dass sie sowohl als Reinsubstanz wie auch als Siloxanlösung über Tage hinweg lagerstabil sind.

Vorzugsweise ist die gelöste Menge Halogenwasserstoff in den Organosiloxanen oder Organosiloxanlösungen der zweiten Reaktionseinheit zwischen 0 bis 100 ppm, besonders bevorzugt zwischen 0 bis 50 ppm, ganz besonders bevorzugt zwischen 0 bis 20 ppm jeweils bezogen auf das Gesamtgewicht der flüssigen Phase im Gefäß der zweiten Reaktionseinheit.

Die erfindungsgemäß erhältlichen Oligosiloxane sind je nach Viskosität entweder als Silikonöl oder als Silikonharz geeignet.

Die weitere Verarbeitung kann sowohl diskontinuierlich als auch kontinuierlich erfolgen. Bevorzugt ist, aufgrund der besonderen Herstellung, eine kontinuierliche Aufarbeitung großtechnisch beispielsweise mittels eines Kurzwegverdampfer, eines Fallfilmverdampfer, eines Dünnschichtverdampfers oder eine Destillationskolonne, um noch enthaltendes Disiloxan (Verbindung 2b, R¹₃Si-O-SiR¹₃) oder gegebenenfalls zusätzlich Lösemittel zu entfernen. Die so erhaltenen Silikonöle sind zur Verwendung als Wärmeträger-, Dämpfer-, Hydrauliköl oder in Kosmetikanwendungen in Cremes, Waschlotionen oder Haarpflegemitteln geeignet. Die so erhaltenen Silikonharze sind für alle bekannten Anwendungen geeignet. Solche Anwendungen sind beispielsweise der Einsatz als Bindemittel, hauptsächlich in Beschichtungen oder als elektrische Isolierung oder als Trennkraftregler in der Papierbeschichtung.

Alle vorstehenden Symbole der vorstehenden Formeln weisen ihre Bedeutungen jeweils unabhängig voneinander auf. In allen Formeln ist das Siliciumatom vierwertig. Die Summe aller Bestandteile der Silikonmischung ergeben 100 Gew.%.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Analytik

### Messung des Gehalts an Disiloxan, M-, D-, T- und Q-Gruppen (²⁹Si-MMR)

Die Bestimmung des Anteils *an Disiloxan, M*-(R₃SiO_{1/2}), *D-(*R₂SiO_{2/2}), *T*-*(*RSiO_{3/2}) *und Q-Gruppen* -*(*SiO_{4/2}) im Produkt erfolgte mittels Kernresonanzspektroskopie (Die ²⁹Si-Kernresonanzspektren wurden an einem Bruker Avance 300 Spektrometer (²⁹Si: 59.6 MHz) mit einem 10 mm-Vierfachresonanz(QNP)-Probenkopf aufgenommen. Die Aufnahme erfolgte mit der INEPT-Pulssequenz bzw. mit der inverse gated-Pulssequenz (Quarzglasröhrchen, NS = 1024; 2000 mg Siloxan in 1000 µl einer 1%igen Lösung von Cr(acac)₃ in C₆D₆/Toluol). Das Integral der *M-, D-, T- und Q*-Werte wurde dazu mit der Gesamtsumme der Integralwerte für M-Gruppen (Kettenenden R₃SiO_{1/2}), D-Gruppen (Kettenglieder R₂Si0_{2/2}), T-Gruppen (Verzweigungspunkte RSiO_{3/2}) und Q-Gruppen (Vernetzungspunkte Si0_{4/2}) in Beziehung gesetzt (% M, % D, % T bzw. %Q). In den Beispielen ist jeweils der Gehalt an M-, D-, T- und Q-Gruppen des gewünschten Organosiloxans; d.h. unter Vernachlässigung des Integrals der zu 10-20% enthaltenen Disiloxane (genauer Gehalt ist in den jeweiligen Beispielen angegeben) (Hexamethyldisiloxan, 1,3-Diethyl-1,1,3,3-tetramethyldisiloxan und 1-Diethyl-1,1,3,3,3-pentamethyldisiloxan und 1,3-Divinyl-1,1,3,3-tetramethyldisiloxan) angegeben. Der Gehalt an Disiloxan im Produkt wurde über ²⁹Si-NMR bestimmt.

### Messung des Ethoxy- und Silanolgehalts (¹H- und ²⁹Si-NMR)

Die Bestimmung des *Ethoxy- und Silanolgehalts* erfolgte mittels Kernresonanzspektroskopie (Die ¹H-Kernresonanzspektren wurden an einem Bruker Avance 500 Spektrometer (¹H: 500.1 MHz) mit einem 5 mm-Breitband(BBO)-Probenkopf aufgenommen (NS = 128; 50 mg Siloxan in 1000 µl CDCl₃). Die ²⁹Si-Kernresonanzspektren wurden an einem Bruker Avance 300 Spektrometer (²⁹Si: 59.6 MHz) mit einem 10 mm-Vierfachresonanz(QNP)-Probenkopf aufgenommen. Die Aufnahme erfolgte mit der INEPT-Pulssequenz bzw. mit der inverse gated-Pulssequenz (Quarzglasröhrchen, NS = 1024; 2000 mg Siloxan in 1000 µl einer 1%igen Lösung von Cr(acac)₃ in C₆D₆/Toluol). Die Detektion der Ethoxy- und Silanolgruppen erfolgte über ¹H-NMR. Umgerechnet in Gew.% wurde das jeweilige Integral unter Berücksichtigung der Anzahl der Protonen, des M-zu D- zu T- zu Q-Verhältnisses (über ²⁹Si-NMR; siehe oben) und der molaren Masse der Einheiten (Ethoxy: CH₃CH₂O_{1/2}, Mw = 37 g/mol; Silanol: HO_{1/2}, Mw = 9 g/mol). Die jeweilige Prozentangabe des Ethoxy- und Silanolgehalts bezieht sich dabei auf die Masse des gewünschten Organosiloxans inklusive der zu 10-20% enthaltenen Disiloxane (genauer Gehalt ist in den jeweiligen Beispielen angegeben) (Hexamethyldisiloxan, 1,3-Diethyl-1,1,3,3-tetramethyldisiloxan und 1-Diethyl-1,1,3,3,3-pentamethyldisiloxan und 1,3-Divinyl-1,1,3,3-tetramethyldisiloxan).

### Gaschromatographie

Zur Steuerung des Prozesses wurde die Zusammensetzung der Mischung im Gefäß (G) der ersten Reaktionseinheit gaschromatographisch untersucht. Eine Probe der Mischung wurde aus dem Gefäß (G) der ersten Reaktionseinheit entnommen und auf unter 35°C abgekühlt bis sich zwei stabile Phasen gebildet haben. Das Verhältnis der Phasen wurde volumetrisch bestimmt und im Prozess über die Steuerung der Dosierung konstant gehalten. Die einzelnen Phasen wurden gaschromatographisch (Agilent 7890A, Siloxan-Phase: DB-1701 (30 m, 0,32 mm, 1,00 µm, Detektor (FID); Alkohol-Phase: HP-5 (30 m, 0,32 mm, 0,25 µm), Detektor (WLD)) bzgl. ihrer Zusammensetzung analysiert und im Prozess wurde daraufhin die Alkohol-, Wasser- und Disiloxan-Menge (Siliciumverbindung 2a) über die Steuerung der Dosierung konstant gehalten.

### Titration

Die Halogenwasserstoffkonzentration der Mischung aus dem Gefäß (G) der ersten Reaktionseinheit wurde mittels Titration gegen 0,1 N ethanolische KOH bestimmt. Als Indikator wurde Tetrabromphenolphthaleinethylester verwendet. Die zu analysierende Probe wurde in Isopropanol/Toluol (1:1 (v/v)) verdünnt.

Die Halogenwasserstoffkonzentration des Produktes wurde mittels Titration gegen 0,01 N ethanolische KOH bestimmt. Als Indikator wurde Tetrabromphenolphthaleinethylester verwendet. Die zu analysierende Probe wurde in Isopropanol/Toluol (1:1 (v/v)) verdünnt.

### Ausführungsbeispiele

In den Beispielen wird eine Apparatur bestehend aus zwei Reaktionseinheiten verwendet: Die erste Reaktionseinheiten besteht aus einem Umlaufverdampfer (= Gefäß (G)) mit einem Füllvolumen von 135 1 und einer darauf aufgesetzten, 10 m langen Kolonne mit einer lichten Weite von 200 mm. Die zweite Reaktionseinheit besteht aus einem Umlaufverdampfer mit einem Füllvolumen von 135 1 und einer darauf aufgesetzten, 6 m langen Kolonne mit einer lichten Weite von 200 mm. Die Kolonne der ersten Reaktionseinheit besitzt oben zunächst einen wasserbetriebenen Kühler (Vorlauftemperatur ca. 20 °C) und anschließend einen solebetriebenen Kühler (Vorlauftemperatur ca. -10 °C). Die dort erhaltenen Destillate werden in die erste Reaktionseinheit zurückgespeist. Das nach dem Kühler enthaltene Halogenwasserstoffgas kann zurückgewonnen werden. Die Kolonne der zweiten Reaktionseinheit besitzt oben zunächst einen wasserbetriebenen Kühler (Vorlauftemperatur ca. 20 °C) und anschließend einen solebetriebenen Kühler (Vorlauftemperatur ca. -10 °C). Die dort erhaltenen Destillate werden in das Gefäß (0) der Kolonne der ersten Reaktionseinheit zurückgespeist. Das nach dem Kühler enthaltene Halogenwasserstoffgas kann zurückgewonnen werden.

Aus dem Umlaufverdampfer der ersten Reaktionseinheit wird kontinuierlich mittels einer Pumpe so viel Reaktionsgemisch ausgetragen, wie durch die Reaktion und die Destillatrückführung erhalten wird. Das Reaktionsgemisch aus dem Umlaufverdampfer der ersten Reaktionseinheit wird auf dem Kopf, direkt unterhalb der Kondensationseinheit der zweiten Kolonne, gegeben.

Aus dem Umlaufverdampfer der zweiten Reaktionseinheit werden ebenfalls mittels einer Pumpe in dem Maße Produkt entfernt, in dem es gebildet wurde.

### Beispiel 1: Tetrakis(trimethylsiloxy)silan

Der 135 1 große Umlaufverdampfer der ersten Reaktionseinheit wird folgendermaßen befüllt:
26,5 kg des gewünschten Organosiloxans
17 kg Hexamethyldisiloxan
28,5 kg Ethanol
7 kg Wasser

Der 135 1 große Umlaufverdampfer der zweiten Reaktionseinheit wird mit 75 kg des gewünschten Organosiloxans und 22 kg Hexamethyldisiloxan befüllt.

Die Reaktionseinheiten werden mittels der Umlaufverdampfer erhitzt, bis ein stabiles Destillationsgleichgewicht in den Kolonnen erreicht wird. Anschließend wird die kontinuierliche Dosierung folgendermaßen gestartet:
2 m unterhalb des Kolonnenkopfes der ersten Reaktionseinheit wird SiCl₄ mit 48 kg/h zugespeist.

In das Gefäß (G) der ersten Reaktionseinheit wird Me₃SiCl in dem Maße zugespeist (üblicherweise: ca. 139 kg/h), so dass der Anteil an Hexamethyldisiloxan (gebildet aus Me₃SiCl und Wasser) im Gefäß (G) der ersten Reaktionseinheit konstant bleibt.

In das Gefäß (G) der Kolonne der ersten Reaktionseinheit wird Wasser in dem Maße zugespeist (üblicherweise: ca. 21,5 kg/h), so dass der Anteil an Wasser im Gefäß (G) der ersten Reaktionseinheit konstant bleibt.

Knapp oberhalb des Umlaufverdampfers (ca. 1 m) wird Ethanol in dem Maße zugespeist (üblicherweise: ca. 2,4 kg/h, so dass ein konstantes Temperaturprofil (von 50-82°C, je nach Messstelle) in der Kolonne erhalten wird. Nach kurzer Zeit bildet sich ein stabiler und konstanter Destillatrücklauf von den Kühlern der ersten Reaktionseinheit von ca. 200-250 l/h aus. Ca. 10-30 l/h des Destillatrücklaufs werden direkt in das Gefäß (G) der ersten Reaktionseinheit geleitet, der Rest auf den Kopf der Kolonne der ersten Reaktionseinheit.

Im Gefäß (G) der ersten Reaktionseinheit befindet sich eine Temperatur von ca. 78°C. Das Reaktionsgemisch enthaltend das gewünschte Organosiloxan wird im Maße seiner Bildung stetig aus dem Umlaufverdampfer entnommen und auf den Kopf unterhalb der Kondensationseinheit der zweiten Reaktionseinheit zugespeist.

Die Temperatur in der Kolonne der zweiten Reaktionseinheit wird bei ca. 95-110°C gehalten. Die Temperatur im Umlaufverdampfer der zweiten Reaktionseinheit liegt bei ca. 150-170°C. Der Kondensatrücklauf aus der zweiten Reaktionseinheit erfolgt in das Gefäß (G) der ersten Reaktionseinheit.

Aus dem Umlaufverdampfer der zweiten Reaktionseinheit wird kontinuierlich unter konstanten Bedingungen über Tage das gewünschte Organosiloxan abgenommen, das noch ca. 14-18% Hexamethyldisiloxan und 0-15 ppm HCl enthält. Die Analytik ergab einen M-Gehalt von 77 mol% (ohne Hexamethyldisiloxan), einen Q-Gehalt von 23 mol% (ohne Hexamethyldisiloxan), einen Ethoxy-Gehalt von 0,68 Gew.% und einen OH-Gehalt von 0,04 Gew.%.

Das gewünschte Organosiloxan kann aufgrund des niedrigen HCl-Gehaltes direkt weiterverarbeitet oder gelagert werden.

### Vergleichsbeispiel 1: Tetrakis(trimethylsiloxy)silan

Der 135 1 große Umlaufverdampfer der ersten Reaktionseinheit wird folgendermaßen befüllt:
26,5 kg des gewünschten Organosiloxans
17 kg Hexamethyldisiloxan
28,5 kg Ethanol
7 kg Wasser

Der 135 1 große Umlaufverdampfer der zweiten Reaktionseinheit wird mit 75 kg des gewünschten Organosiloxans und 22 kg Hexamethyldisiloxan befüllt.

Die Reaktionseinheiten werden mittels der Umlaufverdampfer erhitzt, bis ein stabiles Destillationsgleichgewicht in den Kolonnen erreicht wird. Anschließend wird die kontinuierliche Dosierung folgendermaßen gestartet:
2 m unterhalb des Kolonnenkopfes der ersten Reaktionseinheit wird SiCl₄ mit 48 kg/h zugespeist.

3 m unterhalb des Kolonnenkopfes der ersten Reaktionseinheit wird Me₃SiCl in dem Maße zugespeist (üblicherweise: ca. 139 kg/h), so dass der Anteil an Hexamethyldisiloxan im Gefäß (G) der ersten Reaktionseinheit konstant bleibt.

In das Gefäß (G) der ersten Reaktionseinheit wird Wasser in dem Maße zugespeist (üblicherweise: ca. 21,5 kg/h), so dass der Anteil an Wasser im Gefäß (G) der ersten Reaktionseinheit konstant bleibt.

Knapp oberhalb des Umlaufverdampfers (ca. 1 m) wird Ethanol in dem Maße zugespeist (üblicherweise: ca. 2,4 kg/h), so dass ein konstantes Temperaturprofil (von 50-82°C, je nach Messstelle) in der Kolonne erhalten wird. Nach kurzer Zeit bildet sich verstärkter Destillatrücklauf von den Kühlern der ersten Reaktionseinheit aus. Ca. 10-30 l/h des Destillatrücklaufs werden direkt in das Gefäß (G) der ersten Reaktionseinheit geleitet, der Rest auf den Kopf der ersten Reaktionseinheit. Innerhalb von wenigen Stunden verstärkt sich der Destillatrücklauf von den Kühlern der ersten Reaktionseinheit. Es kommt zu einer Akkumulation von Me₃SiCl im Kopf, in den Kühlern und in den Destillatrücklaufleitungen der ersten Reaktionseinheit. In den Kühlern, den Destillatrücklaufleitungen und im Kolonnenkopf staut sich Kondensat auf. Vom Gefäß (G) der Kolonne der ersten Reaktionseinheit steigt Chlorwasserstoffgas und dampfförmiger Ethanol auf und verhindert damit ein Ablaufen des gestauten Kondensats. Flüssiges, aufgestautes Me₃SiCl reagiert nicht in ausreichendem Umfang mit Ethanoldampf ab (Die Ursache ist zum einen das Gleichgewicht zwischen Me₃SiOEt und Me₃SiCl (zusätzlich vorstehend beschrieben) bei Wasserfreiheit (Wasser reagiert im unteren Kolonnendrittel bereits mit Si-Hal-Einheiten und auch mit intermediär gebildeten Alkoxysilanen ab) und zum anderen der im Vergleich zu Ethanol deutlich niedrigere Siedepunkt von Me₃SiCl), so dass sich die Akkumulation von Me₃SiCl immer weiter verstärkt, was in letzter Konsequenz zum Abbruch und zur Nichtdurchführbarkeit des Prozesses führt.

### Beispiel 2: Tetrakis(trimethylsiloxy)silan

Der 135 1 große Umlaufverdampfer der ersten Reaktionseinheit wird folgendermaßen befüllt:
26,5 kg des gewünschten Organosiloxans
17 kg Hexamethyldisiloxan
28,5 kg Ethanol
7 kg Wasser

Der 135 1 große Umlaufverdampfer der zweiten Reaktionseinheit wird mit 75 kg des gewünschten Organosiloxans und 22 kg Hexamethyldisiloxan befüllt.

Die Reaktionseinheiten werden mittels der Umlaufverdampfer erhitzt, bis ein stabiles Destillationsgleichgewicht in den Kolonnen erreicht wird. Anschließend wird die kontinuierliche Dosierung folgendermaßen gestartet:
2 m unterhalb des Kolonnenkopfes der ersten Reaktionseinheit wird SiCl₄ mit 84 kg/h zugespeist.

In den Sumpf der Kolonne der ersten Reaktionseinheit wird Hexamethyldisiloxan in dem Maße zugespeist (üblicherweise: ca. 182 kg/h), so dass der Anteil an Hexamethyldisiloxan im Gefäß (G) der ersten Reaktionseinheit konstant bleibt.

In das Gefäß (G) der ersten Reaktionseinheit wird Wasser in dem Maße zugespeist (üblicherweise: ca. 17,8 kg/h), so dass der Anteil an Wasser im Gefäß (G) der ersten Reaktionseinheit konstant bleibt.

Knapp oberhalb des Umlaufverdampfers (ca. 1 m) wird Ethanol in dem Maße zugespeist (üblicherweise: ca. 4,2 kg/h), so dass ein konstantes Temperaturprofil (von 50-82°C, je nach Messstelle) in der Kolonne erhalten wird. Nach kurzer Zeit bildet sich ein stabiler und konstanter Destillatrücklauf von den Kühlern der ersten Reaktionseinheit von ca. 340-410 l/h aus. Ca. 15-40 l/h des Destillatrücklaufs werden direkt in das Gefäß (G) der ersten Reaktionseinheit geleitet, der Rest auf den Kopf der ersten Reaktionseinheit.

Im Gefäß (G) der ersten Reaktionseinheit befindet sich eine Temperatur von ca. 78°C. Das Reaktionsgemisch enthaltend das gewünschte Organosiloxan wird im Maße seiner Bildung stetig aus dem Umlaufverdampfer entnommen und auf den Kopf unterhalb der Kondensationseinheit der zweiten Reaktionseinheit zugespeist.

Die Temperatur in der Kolonne der zweiten Reaktionseinheit wird bei ca. 95-110°C gehalten. Die Temperatur im Umlaufverdampfer der zweiten Reaktionseinheit liegt bei ca. 150-170°C. Der Kondensatrücklauf aus der zweiten Reaktionseinheit erfolgt in das Gefäß (G) der ersten Reaktionseinheit.

Aus dem Umlaufverdampfer der zweiten Reaktionseinheit wird kontinuierlich unter konstanten Bedingungen über Tage das gewünschte Organosiloxan abgenommen, das noch ca. 14-18% Hexamethyldisiloxan und 0-17 ppm HCl enthält. Die Analytik ergab einen M-Gehalt von 76 mol% (ohne Hexamethyldisiloxan), einen Q-Gehalt von 24 mol% (ohne Hexamethyldisiloxan), einen Ethoxy-Gehalt von 0,78 Gew.% und einen OH-Gehalt von 0,05 Gew.%.

Das gewünschte Organosiloxan kann aufgrund des niedrigen HCl-Gehaltes direkt weiterverarbeitet oder gelagert werden.

### Beispiel 3: Tetrakis(trimethylsiloxy)silan

Der 135 1 große Umlaufverdampfer der ersten Reaktionseinheit wird folgendermaßen befüllt:
26,5 kg des gewünschten Organosiloxans
17 kg Hexamethyldisiloxan
28,5 kg Ethanol
7 kg Wasser

Der 135 1 große Umlaufverdampfer der zweiten Reaktionseinheit wird mit 75 kg des gewünschten Organosiloxans und 22 kg Hexamethyldisiloxan befüllt.

Die Reaktionseinheiten werden mittels der Umlaufverdampfer erhitzt, bis ein stabiles Destillationsgleichgewicht in den Kolonnen erreicht wird. Anschließend wird die kontinuierliche Dosierung folgendermaßen gestartet:
2 m unterhalb des Kolonnenkopfes der ersten Reaktionseinheit wird SiCl₄ mit 75 kg/h zugespeist.

In den Sumpf der Kolonne der ersten Reaktionseinheit wird Me₃SiCl in dem Maße zugespeist (üblicherweise: ca. 217 kg/h), so dass der Anteil an Hexamethyldisiloxan (gebildet aus Me₃SiCl und Wasser) im Gefäß (G) der ersten Reaktionseinheit konstant bleibt.

In das Gefäß (G) der ersten Reaktionseinheit wird Wasser in dem Maße zugespeist (üblicherweise: ca. 34 kg/h), so dass der Anteil an Wasser im Gefäß (G) der ersten Reaktionseinheit konstant bleibt.

Knapp oberhalb des Umlaufverdampfers (ca. 1 m) wird Ethanol in dem Maße zugespeist (üblicherweise: ca. 3,8 kg/h), so dass ein konstantes Temperaturprofil (von 50-82°C, je nach Messstelle) in der Kolonne erhalten wird. Nach kurzer Zeit bildet sich ein stabiler und konstanter Destillatrücklauf von den Kühlern der ersten Reaktionseinheit von ca. 300-380 l/h aus. Ca. 10-40 l/h des Destillatrücklaufs werden direkt in das Gefäß (G) der ersten Reaktionseinheit geleitet, der Rest auf den Kopf der ersten Reaktionseinheit.

Im Gefäß (G) der ersten Reaktionseinheit befindet sich eine Temperatur von ca. 78°C. Das Reaktionsgemisch enthaltend das gewünschte Organosiloxan wird im Maße seiner Bildung stetig aus dem Umlaufverdampfer entnommen, in einem Kühler auf 30°C abgekühlt, und zur Phasentrennung in einem Koaleszer (Volumen ca. 180 l) gespeist. Die untere ethanolische Sauerwasserphase wird in das Gefäß (G) der ersten Reaktionseinheit überführt und die obere Siloxanphase wird auf den Kopf unterhalb der Kondensationseinheit der zweiten Reaktionseinheit zugespeist.

Die Temperatur in der Kolonne der zweiten Reaktionseinheit wird bei ca. 95-110°C gehalten. Die Temperatur im Umlaufverdampfer der zweiten Reaktionseinheit liegt bei ca. 150-170°C. Der Kondensatrücklauf aus der zweiten Reaktionseinheit erfolgt in das Gefäß (G) der ersten Reaktionseinheit.

Aus dem Umlaufverdampfer der zweiten Reaktionseinheit wird kontinuierlich unter konstanten Bedingungen über Tage das gewünschte Organosiloxan abgenommen, das noch ca. 12-16% Hexamethyldisiloxan und 0-10 ppm HCl enthält. Die Analytik ergab einen M-Gehalt von 78 mol% (ohne Hexamethyldisiloxan), einen Q-Gehalt von 22 mol% (ohne Hexamethyldisiloxan), einen Ethoxy-Gehalt von 0,89 Gew.% und einen OH-Gehalt von 0,06 Gew.%.

Das gewünschte Organosiloxan kann aufgrund des niedrigen HCl-Gehaltes direkt weiterverarbeitet oder gelagert werden.

### Beispiel 4: Tetrakis(trimethylsiloxy)silan

Der 135 1 große Umlaufverdampfer der ersten Reaktionseinheit wird folgendermaßen befüllt:
34 kg des gewünschten Organosiloxans
10,5 kg Hexamethyldisiloxan
27,5 kg Ethanol
6,5 kg Wasser

Der 135 1 große Umlaufverdampfer der zweiten Reaktionseinheit wird mit 75 kg des gewünschten Organosiloxans und 22 kg Hexamethyldisiloxan befüllt.

Die Reaktionseinheiten werden mittels der Umlaufverdampfer erhitzt, bis ein stabiles Destillationsgleichgewicht in den Kolonnen erreicht wird. Anschließend wird die kontinuierliche Dosierung folgendermaßen gestartet:
2 m unterhalb des Kolonnenkopfes der ersten Reaktionseinheit wird SiCl₄ mit 48 kg/h zugespeist.

In den Sumpf der Kolonne der ersten Reaktionseinheit wird Me₃SiCl in dem Maße zugespeist (üblicherweise: ca. 108 kg/h), so dass der Anteil an Hexamethyldisiloxan (gebildet aus Me₃SiCl und Wasser) im Gefäß (G) der ersten Reaktionseinheit konstant bleibt.

In das Gefäß (G) der ersten Reaktionseinheit wird Wasser in dem Maße zugespeist (üblicherweise: ca. 19,2 kg/h), so dass der Anteil an Wasser im Gefäß (G) der ersten Reaktionseinheit konstant bleibt.

Knapp oberhalb des Umlaufverdampfers (ca. 1 m) wird Ethanol in dem Maße zugespeist (üblicherweise: ca. 2,4 kg/h), so dass ein konstantes Temperaturprofil (von 50-82°C, je nach Messstelle) in der Kolonne erhalten wird. Nach kurzer Zeit bildet sich ein stabiler und konstanter Destillatrücklauf von den Kühlern der ersten Reaktionseinheit von ca. 200-250 l/h aus. Ca. 10-30 l/h des Destillatrücklaufs werden direkt in das Gefäß (G) der ersten Reaktionseinheit geleitet, der Rest auf den Kopf der ersten Reaktionseinheit.

Im Gefäß (G) der ersten Reaktionseinheit befindet sich eine Temperatur von ca. 78°C. Das Reaktionsgemisch enthaltend das gewünschte Organosiloxan wird im Maße seiner Bildung stetig aus dem Umlaufverdampfer entnommen und auf den Kopf unterhalb der Kondensationseinheit der zweiten Reaktionseinheit zugespeist.

Die Temperatur in der Kolonne der zweiten Reaktionseinheit wird bei ca. 95-110°C gehalten. Die Temperatur im Umlaufverdampfer der zweiten Reaktionseinheit liegt bei ca. 150-170°C. Der Kondensatrücklauf aus der zweiten Reaktionseinheit erfolgt in das Gefäß (G) der ersten Reaktionseinheit.

Aus dem Umlaufverdampfer der zweiten Reaktionseinheit wird kontinuierlich unter konstanten Bedingungen über Tage das gewünschte Organosiloxan abgenommen, das noch ca. 14-18% Hexamethyldisiloxan und 0-13 ppm HCl enthält. Die Analytik ergab einen M-Gehalt von 75 mol% (ohne Hexamethyldisiloxan), einen Q-Gehalt von 25 mol% (ohne Hexamethyldisiloxan), einen Ethoxy-Gehalt von 0,57 Gew.% und einen OH-Gehalt von 0,03 Gew.%.

Das gewünschte Organosiloxan kann aufgrund des niedrigen HCl-Gehaltes direkt weiterverarbeitet oder gelagert werden.

### Beispiel 5: Tris(trimethylsiloxy)methysilan

Der 135 1 große Umlaufverdampfer der ersten Reaktionseinheit wird folgendermaßen befüllt:
28 kg des gewünschten Organosiloxans
15,5 kg Hexamethyldisiloxan
29 kg Ethanol
6,5 kg Wasser

Der 135 1 große Umlaufverdampfer der zweiten Reaktionseinheit wird mit 75 kg des gewünschten Organosiloxans und 22 kg Hexamethyldisiloxan befüllt.

Die Reaktionseinheiten werden mittels der Umlaufverdampfer erhitzt, bis ein stabiles Destillationsgleichgewicht in den Kolonnen erreicht wird. Anschließend wird die kontinuierliche Dosierung folgendermaßen gestartet:
2 m unterhalb des Kolonnenkopfes der ersten Reaktionseinheit wird MeSiCl₃ mit 55 kg/h zugespeist.

In den Sumpf der Kolonne der ersten Reaktionseinheit wird Me₃SiCl in dem Maße zugespeist (üblicherweise: ca. 148 kg/h), so dass der Anteil an Hexamethyldisiloxan (gebildet aus Me₃SiCl und Wasser) im Gefäß (G) der ersten Reaktionseinheit konstant bleibt.

In das Gefäß (G) der ersten Reaktionseinheit wird Wasser in dem Maße zugespeist (üblicherweise: ca. 25,5 kg/h), so dass der Anteil an Wasser im Gefäß (G) der ersten Reaktionseinheit konstant bleibt.

Knapp oberhalb des Umlaufverdampfers (ca. 1 m) wird Ethanol in dem Maße zugespeist (üblicherweise: ca. 2,8 kg/h), so dass ein konstantes Temperaturprofil (von 50-82°C, je nach Messstelle) in der Kolonne erhalten wird. Nach kurzer Zeit bildet sich ein stabiler und konstanter Destillatrücklauf von den Kühlern der ersten Reaktionseinheit von ca. 220-280 l/h aus. Ca. 10-30 l/h des Destillatrücklaufs werden direkt in das Gefäß (G) der ersten Reaktionseinheit geleitet, der Rest auf den Kopf der ersten Reaktionseinheit.

Im Gefäß (G) der ersten Reaktionseinheit befindet sich eine Temperatur von ca. 78°C. Das Reaktionsgemisch enthaltend das gewünschte Organosiloxan wird im Maße seiner Bildung stetig aus dem Umlaufverdampfer entnommen und auf den Kopf unterhalb der Kondensationseinheit der zweiten Reaktionseinheit zugespeist.

Die Temperatur in der Kolonne der zweiten Reaktionseinheit wird bei ca. 95-110°C gehalten. Die Temperatur im Umlaufverdampfer der zweiten Reaktionseinheit liegt bei ca. 150-170°C. Der Kondensatrücklauf aus der zweiten Reaktionseinheit erfolgt in das Gefäß (G) der ersten Reaktionseinheit.

Aus dem Umlaufverdampfer der zweiten Reaktionseinheit wird kontinuierlich unter konstanten Bedingungen über Tage das gewünschte Organosiloxan abgenommen, das noch ca. 14-18% Hexamethyldisiloxan und 2-15 ppm HCl enthält. Die Analytik ergab einen M-Gehalt von 74 mol% (ohne Hexamethyldisiloxan), einen T-Gehalt von 26 mol% (ohne Hexamethyldisiloxan), einen Ethoxy-Gehalt von 0,49 Gew.% und einen OH-Gehalt von 0,04 Gew.%.

Das gewünschte Organosiloxan kann aufgrund des niedrigen HCl-Gehaltes direkt weiterverarbeitet oder gelagert werden.

### Beispiel 6: Tetrakis(vinyldimethylsiloxy)silan

Der 135 1 große Umlaufverdampfer der ersten Reaktionseinheit wird folgendermaßen befüllt:
26 kg des gewünschten Organosiloxans
17,5 kg 1,3-Divinyl-1,1,3,3-tetramethyldisiloxan
28 kg Ethanol
6,5 kg Wasser

Der 135 1 große Umlaufverdampfer der zweiten Reaktionseinheit wird mit 75 kg des gewünschten Organosiloxans und 22 kg 1,3-Divinyl-1,1,3,3-tetramethyldisiloxan befüllt.

Die Reaktionseinheiten werden mittels der Umlaufverdampfer erhitzt, bis ein stabiles Destillationsgleichgewicht in den Kolonnen erreicht wird. Anschließend wird die kontinuierliche Dosierung folgendermaßen gestartet:
2 m unterhalb des Kolonnenkopfes der ersten Reaktionseinheit wird SiCl₄ mit 70 kg/h zugespeist.

In den Sumpf der Kolonne der ersten Reaktionseinheit wird Chlor(dimethyl)vinylsilan in dem Maße zugespeist (üblicherweise: ca. 225 kg/h), so dass der Anteil an 1,3-Divinyl-1,1,3,3-tetramethyldisiloxan (gebildet aus 2 Chlor(dimethyl)vinylsilan und Wasser) im Gefäß (G) der ersten Reaktionseinheit konstant bleibt.

In das Gefäß (G) der ersten Reaktionseinheit wird Wasser in dem Maße zugespeist (üblicherweise: ca. 32 kg/h), so dass der Anteil an Wasser im Gefäß (G) der ersten Reaktionseinheit konstant bleibt.

Knapp oberhalb des Umlaufverdampfers (ca. 1 m) wird Ethanol in dem Maße zugespeist (üblicherweise: ca. 3,5 kg/h), so dass ein konstantes Temperaturprofil (von 50-82°C, je nach Messstelle) in der Kolonne erhalten wird. Nach kurzer Zeit bildet sich ein stabiler und konstanter Destillatrücklauf von den Kühlern der ersten Reaktionseinheit von ca. 290-360 l/h aus. Ca. 10-40 l/h des Destillatrücklaufs werden direkt in das Gefäß (G) der ersten Reaktionseinheit geleitet, der Rest auf den Kopf der ersten Reaktionseinheit.

Im Gefäß (G) der ersten Reaktionseinheit befindet sich eine Temperatur von ca. 78°C. Das Reaktionsgemisch enthaltend das gewünschte Organosiloxan wird im Maße seiner Bildung stetig aus dem Umlaufverdampfer entnommen und auf den Kopf unterhalb der Kondensationseinheit der zweiten Reaktionseinheit zugespeist.

Die Temperatur in der Kolonne der zweiten Reaktionseinheit wird bei ca. 130-150°C gehalten. Die Temperatur im Umlaufverdampfer der zweiten Reaktionseinheit liegt bei ca. 180-210°C. Der Kondensatrücklauf aus der zweiten Reaktionseinheit erfolgt in das Gefäß (G) der ersten Reaktionseinheit.

Aus dem Umlaufverdampfer der zweiten Reaktionseinheit wird kontinuierlich unter konstanten Bedingungen über Tage das gewünschte Organosiloxan abgenommen, das noch ca. 17-22% 1,3-Divinyl-1,1,3,3-tetramethyldisiloxan und 1-14 ppm HCl enthält. Die Analytik ergab einen M-Gehalt von 77 mol% (ohne 1,3-Divinyl-1,1,3,3-tetramethyldisiloxan), einen Q-Gehalt von 23 mol% (ohne 1,3-Divinyl-1,1,3,3-tetramethyldisiloxan), einen Ethoxy-Gehalt von 0,61 Gew.% und einen OH-Gehalt von 0,04 Gew.% Das gewünschte Organosiloxan kann aufgrund des niedrigen HCl-Gehaltes direkt weiterverarbeitet oder gelagert werden.

### Beispiel 7: Bis(ethyldimethylsiloxy)bis(trimethylsiloxy)silan

Der 135 1 große Umlaufverdampfer der ersten Reaktionseinheit wird folgendermaßen befüllt:
27 kg des gewünschten Organosiloxans
7,4 kg Hexamethyldisiloxan
8,7 kg 1,3-Diethyl-1,1,3,3-tetramethyldisiloxan
29 kg Ethanol
7 kg Wasser

Der 135 1 große Umlaufverdampfer der zweiten Reaktionseinheit wird mit 75 kg des gewünschten Organosiloxans und 22 kg 1,3-Diethyl-1,1,3,3-tetramethyldisiloxan befüllt.

Die Reaktionseinheiten werden mittels der Umlaufverdampfer erhitzt, bis ein stabiles Destillationsgleichgewicht in den Kolonnen erreicht wird. Anschließend wird die kontinuierliche Dosierung folgendermaßen gestartet:
2 m unterhalb des Kolonnenkopfes der ersten Reaktionseinheit wird SiCl₄ mit 48 kg/h zugespeist.

In den Sumpf der Kolonne der ersten Reaktionseinheit wird eine Mischung bestehend aus Me₃SiCl und EtMe2SiCl im molaren Verhältnis 1:1 in dem Maße zugespeist (üblicherweise: ca. 148 kg/h), so dass der Anteil an Hexamethyldisiloxan, 1,3-Diethyl-1,1,3,3-tetramethyldisiloxan und 1-Diethyl-1,1,3,3,3-pentamethyldisiloxan (gebildet aus Me₃SiCl, EtMe2SiCl und Wasser) im Gefäß (G) der ersten Reaktionseinheit konstant bleibt.

In das Gefäß (G) der ersten Reaktionseinheit wird Wasser in dem Maße zugespeist (üblicherweise: ca. 21,5 kg/h), so dass der Anteil an Wasser im Gefäß (G) der ersten Reaktionseinheit konstant bleibt.

Knapp oberhalb des Umlaufverdampfers (ca. 1 m) wird Ethanol in dem Maße zugespeist (üblicherweise: ca. 2,4 kg/h), so dass ein konstantes Temperaturprofil (von 50-82°C, je nach Messstelle) in der Kolonne erhalten wird. Nach kurzer Zeit bildet sich ein stabiler und konstanter Destillatrücklauf von den Kühlern der ersten Reaktionseinheit von ca. 200-250 l/h aus. Ca. 10-30 l/h des Destillatrücklaufs werden direkt in das Gefäß (G) der ersten Reaktionseinheit geleitet, der Rest auf den Kopf der ersten Reaktionseinheit.

Im Gefäß (G) der ersten Reaktionseinheit befindet sich eine Temperatur von ca. 78°C. Das Reaktionsgemisch enthaltend das gewünschte Organosiloxan wird im Maße seiner Bildung stetig aus dem Umlaufverdampfer entnommen und auf den Kopf unterhalb der Kondensationseinheit der zweiten Reaktionseinheit zugespeist.

Die Temperatur in der Kolonne der zweiten Reaktionseinheit wird bei ca. 130-155°C gehalten. Die Temperatur im Umlaufverdampfer der zweiten Reaktionseinheit liegt bei ca. 190-215°C. Der Kondensatrücklauf aus der zweiten Reaktionseinheit erfolgt in das Gefäß (G) der ersten Reaktionseinheit.

Aus dem Umlaufverdampfer der zweiten Reaktionseinheit wird kontinuierlich unter konstanten Bedingungen über Tage das gewünschte Organosiloxan abgenommen, das noch ca. 14-18% Hexamethyldisiloxan, 1,3-Diethyl-1,1,3,3-tetramethyldisiloxan und 1-Diethyl-1,1,3,3,3-pentamethyldisiloxan und 2-17 ppm HCl enthält. Die Analytik ergab einen M-Gehalt von 76 mol% (ohne Hexamethyldisiloxan, 1,3-Diethyl-1,1,3,3-tetramethyldisiloxan und 1-Diethyl-1,1,3,3,3-pentamethyldisiloxan), einen Q-Gehalt von 24 mol% (ohne Hexamethyldisiloxan, 1,3-Diethyl-1,1,3,3-tetramethyldisiloxan und 1-Diethyl-1,1,3,3,3-pentamethyldisiloxan), einen Ethoxy-Gehalt von 0,73 Gew.% und einen OH-Gehalt von 0,06 Gew.%.

Das gewünschte Organosiloxan kann aufgrund des niedrigen HCl-Gehaltes direkt weiterverarbeitet oder gelagert werden.

### Beispiel 8: MDTQ-Harz

Der 135 1 große Umlaufverdampfer der ersten Reaktionseinheit wird folgendermaßen befüllt:
36,5 kg des gewünschten Organosiloxans
7 kg Hexamethyldisiloxan
28,5 kg Ethanol
7 kg Wasser

Der 135 1 große Umlaufverdampfer der zweiten Reaktionseinheit wird mit 75 kg des gewünschten Organosiloxans und 22 kg Hexamethyldisiloxan befüllt.

Die Reaktionseinheiten werden mittels der Umlaufverdampfer erhitzt, bis ein stabiles Destillationsgleichgewicht in den Kolonnen erreicht wird. Anschließend wird die kontinuierliche Dosierung folgendermaßen gestartet:
2 m unterhalb des Kolonnenkopfes der ersten Reaktionseinheit wird SiCl₄ mit 44 kg/h und MeSiCl₃ mit 23 kg/h zugespeist.

In den Sumpf der Kolonne der ersten Reaktionseinheit wird Me₃SiCl in dem Maße zugespeist (üblicherweise: ca. 56 kg/h), so dass der Anteil an Hexamethyldisiloxan (gebildet aus Me₃SiCl und Wasser) im Gefäß (G) der ersten Reaktionseinheit konstant bleibt. In den Sumpf der Kolonne der ersten Reaktionseinheit werden ca. 3,3 kg/h Me₂SiCl₂ zugespeist.

In das Gefäß (G) der ersten Reaktionseinheit wird Wasser in dem Maße zugespeist (üblicherweise: ca. 18,5 kg/h), so dass der Anteil an Wasser im Gefäß (G) der ersten Reaktionseinheit konstant bleibt.

Knapp oberhalb des Umlaufverdampfers (ca. 1 m) wird Ethanol in dem Maße zugespeist (üblicherweise: ca. 4,1 kg/h), so dass ein konstantes Temperaturprofil (von 50-82°C, je nach Messstelle) in der Kolonne erhalten wird. Nach kurzer Zeit bildet sich ein stabiler und konstanter Destillatrücklauf von den Kühlern der ersten Reaktionseinheit von ca. 230-280 l/h aus. Ca. 10-40 l/h des Destillatrücklaufs werden direkt in das Gefäß (G) der ersten Reaktionseinheit geleitet, der Rest auf den Kopf der ersten Reaktionseinheit.

Im Gefäß (G) der ersten Reaktionseinheit befindet sich eine Temperatur von ca. 78°C. Das Reaktionsgemisch enthaltend das gewünschte Organosiloxan wird im Maße seiner Bildung stetig aus dem Umlaufverdampfer entnommen und auf den Kopf unterhalb der Kondensationseinheit der zweiten Reaktionseinheit zugespeist.

Die Temperatur in der Kolonne der zweiten Reaktionseinheit wird bei ca. 95-110°C gehalten. Die Temperatur im Umlaufverdampfer der zweiten Reaktionseinheit liegt bei ca. 150-170°C. Der Kondensatrücklauf aus der zweiten Reaktionseinheit erfolgt in das Gefäß (G) der ersten Reaktionseinheit.

Aus dem Umlaufverdampfer der zweiten Reaktionseinheit wird kontinuierlich unter konstanten Bedingungen über Tage das gewünschte Organosiloxan abgenommen, das noch ca. 12-16% Hexamethyldisiloxan und 3-17 ppm HCl enthält. Die Analytik ergab einen M-Gehalt von 46 mol% (ohne Hexamethyldisiloxan), einen D-Gehalt von 3 mol% (ohne Hexamethyldisiloxan), einen T-Gehalt von 19 mol% (ohne Hexamethyldisiloxan) und einen Q-Gehalt von 32 mol% (ohne Hexamethyldisiloxan), einen Ethoxy-Gehalt von 2,29 Gew.%, einen OH-Gehalt von 0,41 Gew.%.

Das gewünschte Organosiloxan kann aufgrund des niedrigen HCl-Gehaltes direkt weiterverarbeitet oder gelagert werden. Zur Bestimmung des Molekulargewichts wurde das gewünschte Organosiloxan von Hexamethyldisiloxan mittels Dünnschichtverdampfer unter Vakuum befreit. Das gewünschte Organosiloxan weist ein Molekulargewicht Mw von 1814 g/mol auf.

## Patentansprüche

1. Kontinuierliches Verfahren zur Herstellung von Organosiloxanen (O) durch Umsetzung von Siliciumverbindung 1 der allgemeinen Formel 1
RₙSiHal₄₋ₙ (1),
und Siliciumverbindung 2, die ausgewählt wird aus Siliciumverbindung der allgemeinen Formel 2a oder Siliciumverbindung der allgemeinen Formel 2b oder Gemischen aus Siliciumverbindung der allgemeinen Formel 2a und 2b
R¹₃SiHal (2a),
R¹₃Si-O-SiR¹₃ (2b),
wobei
**R** Wasserstoff oder einen C1-C12 Kohlenwasserstoffrest,
**R¹** Wasserstoff oder einen C1-C7 Kohlenwasserstoffrest,
**Hal** Fluor, Chlor, Brom oder Iod und
n einen Wert 0 oder 1 bedeuten,
mit Alkohol und Wasser in Gegenwart von Organosiloxan (O) in einer Reaktionseinheit umfassend eine Destillationskolonne und ein darunter angeordnetes Organosiloxan (O) enthaltendes Gefäß (G), wobei der Inhalt des Gefäßes zum Sieden unter Rückfluss erhitzt wird, Siliciumverbindung 1 oberhalb des unteren Kolonnenendes in die Kolonne eingeführt, Siliciumverbindung 2 in das Gefäß (G) eingeführt wird, entstehender Halogenwasserstoff mittels der Destillationskolonne entfernt wird und Organosiloxan (O) im Maße seiner Bildung stetig aus dem Gefäß abgezogen wird, wobei der Reaktionseinheit stetig Siliciumverbindung 1, Siliciumverbindung 2, Alkohol und Wasser in solchen Mengen zugegeben wird, dass in der Reaktionseinheit immer mehr Wasser enthalten ist, als durch die zugegebenen Siliciumverbindung 1 und Siliciumverbindung 2 verbraucht werden kann.

2. Verfahren nach Anspruch 1, bei dem die Siliciumverbindungen 1 und 2, Alkohol und Wasser in solchen Mengen in die Reaktionseinheit eingeführt werden, dass in dem Gefäß (G) mindestens 3 Gew.% Wasser, bezogen auf das Gesamtgewicht der flüssigen Phase im Gefäß (G), vorliegt.

3. Verfahren nach einem oder mehreren der vorangehenden Ansprüche, bei dem die Siliciumverbindungen 1 und 2, Alkohol und Wasser in solchen Mengen in die Reaktionseinheit eingeführt werden, dass in dem Gefäß (G) mindestens 20 Gew.% Alkohol, bezogen auf das Gesamtgewicht der flüssigen Phase im Gefäß (G), vorliegt.

4. Verfahren nach einem oder mehreren der vorangehenden Ansprüche, bei dem die C1-C7 bzw. C12 Kohlenwasserstoffreste **R** und **R¹** ausgewählt werden aus Methyl-, Ethyl-, Vinyl-, n-Propyl-, i-Propyl, n-Butyl, i-Butyl, n-Pentyl-, i-Pentyl, n-Hexyl, i-Hexyl-, Cyclohexyl, n-Heptyl-, n-Octyl, i-Octyl-, Phenyl- und Tolylresten.

5. Verfahren nach einem oder mehreren der vorangehenden Ansprüche, bei dem das Halogenatom **Hal** Chlor ist.

6. Verfahren nach einem oder mehreren der vorangehenden Ansprüche, bei dem zusätzlich Siliciumverbindung 3
R¹₂SiHal₂ (3),
oberhalb des unteren Kolonnenendes in die Kolonne oder in das Gefäß (G) eingeführt wird, wobei
**R¹** und **Hal** die in Anspruch 1 angegebenen Bedeutungen aufweisen.

7. Verfahren nach einem oder mehreren der vorangehenden Ansprüche, bei dem der Alkohol der allgemeinen Formel R"OH entspricht, worin **R"** ein einwertiger, aliphatischer Kohlenwasserstoffrest mit 1 bis 8 Kohlenstoffatomen ist.

8. Verfahren nach einem oder mehreren der vorangehenden Ansprüche, bei dem die aus der Reaktionseinheit erhaltene Mischung enthaltend das Organosiloxan (O) in eine zweite Reaktionseinheit verbracht und dort auf eine Temperatur erhitzt wird, bei der die Mischung von flüchtigen Bestandteilen komplett oder partiell befreit wird, wobei die flüchtigen Bestandteile von der zweiten Reaktionseinheit in die erste Reaktionseinheit zurückgeführt werden und Organosiloxan (O) im Maße seiner Bildung stetig aus dem Sumpf der zweiten Reaktionseinheit abgezogen wird.

9. Verfahren nach einem oder mehreren der vorangehenden Ansprüche, bei dem die gelöste Menge Halogenwasserstoff zwischen 40000 bis 100000 ppm, jeweils bezogen auf das Gesamtgewicht der flüssigen Phase im Gefäß (G) der ersten Reaktionseinheit beträgt.

10. Verfahren nach einem oder mehreren der vorangehenden Ansprüche, bei dem die Konzentration des Halogenwasserstoffs durch Einleiten eines Inertgases in das Gefäß (G) der ersten Reaktionseinheit gesteuert wird.

11. Verfahren nach einem oder mehreren der Ansprüche 8, 9 oder 10, bei dem die Konzentration des Halogenwasserstoffs durch Einleiten eines Inertgases in den Kolonnensumpf der zweiten Reaktionseinheit gesteuert wird.

12. Verfahren nach einem oder mehreren der Ansprüche 8, 9, 10 oder 11, bei dem eine zwischen der ersten und zweiten Reaktionseinheit geschaltete Phasenseparierung vorgenommen wird.

## Claims

1. Continuous method for producing organosiloxanes (O) by reacting silicon compound 1 of general formula 1
RₙSiHal₄₋ₙ (1),
and silicon compound 2, which is selected from silicon compound of general formula 2a or silicon compound of general formula 2b or mixtures of silicon compound of general formula 2a and 2b
R¹₃SiHal (2a),
R¹₃Si-O-SiR¹₃ (2b),
wherein
**R** is hydrogen or a C1-C12 hydrocarbon radical,
**R¹** is hydrogen or a C1-C7 hydrocarbon radical,
**Hal** is fluorine, chlorine, bromine or iodine, and
**n** has a value of 0 or 1,
with alcohol and water in the presence of organosiloxane (O) in a reaction unit comprising a distillation column and a vessel (V) containing organosiloxane (O) arranged thereunder, wherein the content of the vessel is heated to boiling under reflux, silicon compound 1 is introduced into the column above the lower end of the column, silicon compound 2 is introduced into the vessel (V), hydrogen halide forming is removed by means of the distillation column, and organosiloxane (O) is constantly drawn off from the vessel to the extent to which it is formed, wherein silicon compound 1, silicon compound 2, alcohol and water are constantly supplied to the reaction unit in such amounts that there is always more water contained in the reaction unit than can be consumed by the supplied silicon compound 1 and silicon compound 2.

2. Method according to Claim 1, wherein the silicon compounds 1 and 2, alcohol and water are introduced into the reaction unit in such amounts that there is at least 3 wt% of water present in the vessel (V), based on the total weight of the liquid phase in the vessel (V).

3. Method according to one or more of the preceding claims, wherein the silicon compounds 1 and 2, alcohol and water are introduced into the reaction unit in such amounts that there is at least 20 wt% of alcohol present in the vessel (V), based on the total weight of the liquid phase in the vessel (V).

4. Method according to one or more of the preceding claims, wherein the C1-C7 or C12 hydrocarbon radicals **R** and **R¹** are selected from methyl, ethyl, vinyl, n-propyl, i-propyl, n-butyl, i-butyl, n-pentyl, i-pentyl, n-hexyl, i-hexyl, cyclohexyl, n-heptyl, n-octyl, i-octyl, phenyl and tolyl radicals.

5. Method according to one or more of the preceding claims, wherein the halogen atom **Hal** is chlorine.

6. Method according to one or more of the preceding claims, wherein additionally silicon compound 3
R¹₂SiHal₂ (3),
is introduced into the vessel (V) or into the column above the lower end of the column, wherein
**R¹** and **Hal** have the meanings given in Claim 1.

7. Method according to one or more of the preceding claims, wherein the alcohol corresponds to the general formula R"OH, in which **R"** is a monovalent aliphatic hydrocarbon radical having 1 to 8 carbon atoms.

8. Method according to one or more of the preceding claims, wherein the mixture comprising the organosiloxane (O) obtained from the reaction unit is passed into a second reaction unit and heated there to a temperature at which volatile constituents are completely or partially removed from the mixture, wherein the volatile constituents are recycled from the second reaction unit back into the first reaction unit, and organosiloxane (O) is constantly drawn off from the bottom of the second reaction unit to the extent to which it is formed.

9. Method according to one or more of the preceding claims, wherein the dissolved amount of hydrogen halide is 40 000 to 100 000 ppm, in each case based on the total weight of the liquid phase in the vessel (V) of the first reaction unit.

10. Method according to one or more of the preceding claims, wherein the concentration of the hydrogen halide is controlled by introducing an inert gas into the vessel (V) of the first reaction unit.

11. Method according to one or more of Claims 8, 9 or 10, wherein the concentration of the hydrogen halide is controlled by introducing an inert gas into the column bottom of the second reaction unit.

12. Method according to one or more of Claims 8, 9, 10 or 11, wherein a phase separation connected between the first and second reaction unit is performed.

## Revendications

1. Procédé continu de fabrication d'organosiloxanes (O) par mise en réaction d'un composé de silicium 1 de la formule générale 1 :
RₙSiHal₄₋ₙ (1)
et d'un composé de silicium 2, qui est choisi parmi un composé de silicium de la formule générale 2a ou un composé de silicium de la formule générale 2b ou des mélanges d'un composé de silicium de la formule générale 2a et 2b :
R¹₃SiHal (2a)
R¹₃Si-O-SiR¹₃ (2b)
dans lesquelles
**R** signifie l'hydrogène ou un radical hydrocarboné en C1-C12,
**R¹** signifie l'hydrogène ou un radical hydrocarboné en C1-C7,
**Hal** signifie fluor, chlore, brome ou iode, et
**n** signifie une valeur de 0 ou 1,
avec un alcool et de l'eau en présence d'un organosiloxane (O) dans une unité de réaction comprenant une colonne de distillation et un récipient (G) contenant un organosiloxane (O) agencé en dessous, le contenu du récipient étant porté à ébullition à reflux, le composé de silicium 1 étant introduit dans la colonne au-dessus de l'extrémité de colonne inférieure, le composé de silicium 2 étant introduit dans le récipient (G), l'halogénure d'hydrogène formé étant éliminé au moyen de la colonne de distillation, et l'organosiloxane (O) étant soutiré en continu du récipient au fur et à mesure de sa formation, le composé de silicium 1, le composé de silicium 2, l'alcool et l'eau étant ajoutés en continu dans l'unité de réaction en quantités telles que l'unité de réaction contient toujours plus d'eau que celle pouvant être consommée par le composé de silicium 1 et le composé de silicium 2 ajoutés.

2. Procédé selon la revendication 1, selon lequel les composés de silicium 1 et 2, l'alcool et l'eau sont introduits dans l'unité de réaction en quantités telles qu'au moins 3 % en poids d'eau, par rapport au poids total de la phase liquide dans le récipient (G), est présente dans le récipient (G).

3. Procédé selon une ou plusieurs des revendications précédentes, selon lequel les composés de silicium 1 et 2, l'alcool de l'eau sont introduits dans l'unité de réaction en quantités telles qu'au moins 20 % en poids d'alcool, par rapport au poids total de la phase liquide dans le récipient (G), est présent dans le récipient (G).

4. Procédé selon une ou plusieurs des revendications précédentes, selon lequel les radicaux hydrocarbonés en C1-C7 ou C12 **R** et **R¹** sont choisis parmi les radicaux méthyle, éthyle, vinyle, n-propyle, i-propyle, n-butyle, i-butyle, n-pentyle, i-pentyle, n-hexyle, i-hexyle, cyclohexyle, n-heptyle, n-octyle, i-octyle, phényle et tolyle.

5. Procédé selon une ou plusieurs des revendications précédentes, selon lequel l'atome d'halogène **Hal** est le chlore.

6. Procédé selon une ou plusieurs des revendications précédentes, selon lequel un composé de silicium 3 :
R¹₂SiHal₂ (3)
est en outre introduit au-dessus de l'extrémité de colonne inférieure dans la colonne ou dans le récipient (G), dans lequel
**R¹** et **Hal** ont les significations indiquées dans la revendication 1.

7. Procédé selon une ou plusieurs des revendications précédentes, selon lequel l'alcool correspond à la formule générale R"OH, dans laquelle **R"** est un radical hydrocarboné aliphatique monovalent de 1 à 8 atomes de carbone.

8. Procédé selon une ou plusieurs des revendications précédentes, selon lequel le mélange obtenu dans l'unité de réaction contenant l'organosiloxane (O) est consommé dans une deuxième unité de réaction et y est porté à une température à laquelle le mélange est complètement ou partiellement débarrassé des constituants volatils, les constituants volatils étant recyclés depuis la deuxième unité de réaction dans la première unité de réaction, et l'organosiloxane (O) étant soutiré en continu au fond de la deuxième unité de réaction au fur et à mesure de sa formation.

9. Procédé selon une ou plusieurs des revendications précédentes, selon lequel la quantité dissoute d'halogénure d'hydrogène est comprise entre 40 000 et 100 000 ppm, à chaque fois par rapport au poids total de la phase liquide dans le récipient (G) de la première unité de réaction.

10. Procédé selon une ou plusieurs des revendications précédentes, selon lequel la concentration de l'halogénure d'hydrogène est ajustée par introduction d'un gaz inerte dans le récipient (G) de la première unité de réaction.

11. Procédé selon une ou plusieurs des revendications 8, 9 ou 10, selon lequel la concentration de l'halogénure d'hydrogène est ajustée par introduction d'un gaz inerte dans le fond de colonne de la deuxième unité de réaction.

12. Procédé selon une ou plusieurs des revendications 8, 9, 10 ou 11, selon lequel une séparation de phases disposée entre la première et la deuxième unité de réaction est réalisée.
